# FASCICULE DE BREVET EUROPEEN

(11) **EP 1 436 072 B1**
(45) Date de publication et mention de la délivrance du brevet: **04.08.2010**
(21) Numéro de dépôt: 02783208.8
(22) Date de dépôt: 25.09.2002
(51) Int. Cl.: B01D 71/02, B01D 69/12, B01D 61/02, C04B 41/50

(54) **NOUVELLES MEMBRANES INORGANIQUES DE NANOFILTRATION**
NEUE ANORGANISCHE NANOFILTRATIONSMEMBRANEN
NOVEL INORGANIC NANOFILTRATION MEMBRANES

(30) Priorité: 26.09.2001 FR 0112362
(43) Date de publication de la demande: 14.07.2004
(73) Titulaire: Technologies Avancées & Membranes Industrielles, 26110 Nyons (FR); Grangeon, André, 84600 Valreas (FR)
(72) Inventeur: GRANGEON, André, F-84600 Valreas (FR)
(74) Mandataire: Sarlin, Laure V.
(86) Numéro de dépôt international: PCT/FR2002/003265
(87) Numéro de publication internationale: WO 2003/026781

(56) Documents cités:
- EP-A- 0 344 011
- EP-A- 0 425 252
- EP-A- 0 426 546
- EP-A- 0 692 303
- FR-A- 2 754 737
- US-A- 5 006 248
- US-A- 5 096 745

## Description

La présente invention concerne le domaine des techniques séparatives à membrane. L'objet de l'invention vise, plus précisément, des membranes inorganiques de nanofiltration.

Les procédés de séparation utilisant des membranes sont utilisés dans de nombreux secteurs, notamment dans l'environnement pour la production d'eau potable et le traitement des effluents industriels, dans l'industrie chimique, pétrochimique, pharmaceutique, agro-alimentaire et dans le domaine de la biotechnologie.

Une membrane constitue une barrière mince sélective et permet sous l'action d'une force de transfert le passage ou l'arrêt de certains composants du milieu à traiter. Le passage ou l'arrêt des composants peut résulter de leur taille par rapport à la taille des pores de la membrane qui se comporte alors comme un filtre. En fonction de la taille des pores, ces techniques sont nommées microfiltration, ultrafiltration, ou nanofltration.

Il existe des membranes de structure et texture différentes. Certaines sont composées de matériaux organiques, de type polymères de synthèse et sont nommées membranes organiques, d'autres sont composées de matériaux inorganiques et sont nommées membranes inorganiques.

Les membranes inorganiques sont en général constituées d'un support macroporeux de 0,5 à 3 mm d'épaisseur qui assure la résistance mécanique de la membrane. Ce support est en général composé de carbone, alumine-titane, silico-aluminate ou carbure de silicium. Le brevet FR 2754737 décrit une membrane inorganique de nanofiltration comportant un support monolithe céramique multicanal composé d'un mélange d'Al₂O₃ et de TiO₂ qui consiste en une céramique de grains d'Al₂O₃ enrobés au moins en partie par des grains de TiO₂.

Sur le support, une ou plusieurs couches de quelques microns d'épaisseur assurant la séparation et dites couches séparatrices sont déposées. Le diamètre des pores est choisi en fonction de la taille des espèces à séparer. Ces couches sont, en général, constituées d'oxydes métalliques, de verre ou de carbone et sont liées entre elles et au support par frittage.

Le support et les couches séparatrices se distinguent, notamment, par des diamètres moyens de pores ou porosité ou par des masses spécifiques différentes. Les notions de couche séparatrice de microfiltration, ultrafiltration et nanofiltration sont bien connues de l'homme de l'art. Il est généralement admis que :
- les supports présentent un diamètre moyen de pore compris entre 2 et 10 µm et une masse spécifique comprise entre 3000 et 6000 g/m²,
- les couches séparatrices de microfiltration présentent un diamètre moyen de pore compris entre 0,1 et 2 µm et une masse spécifique comprise entre 30 et 60 g/m²,
- les couches séparatrices d'ultrafltration présentent un diamètre moyen de pore compris entre 0,02 et 0,1 µm et une masse spécifique comprise entre 5 et 10 g/m²,
- les couches séparatrices de nanofiltration présentent un diamètre moyen de pore compris entre 0,5 et 2 nm et une masse spécifique comprise entre 1 et 5 g/m².

La nanofiltration est une technique séparative à membrane sous pression relativement récente. La nanofiltration couvre un domaine de séparation entre l'ultrafiltration et l'osmose inverse.

Les membranes de nanofiltration se présentent, en général, sous la forme :
- d'un support macroporeux offrant une bonne résistance mécanique,
- d'une couche séparatrice intermédiaire mésoporeuse assurant la liaison entre le support et la couche active,
- d'une couche supérieure active séparatrice de nanofiltration présentant des diamètres de pores de l'ordre du nanomètre, assurant la séparation des espèces moléculaires ou particulaires.

La plupart des membranes de nanofiltration développées à ce jour, sont des membranes organiques ou des membranes mixtes organiques et inorganiques et de ce fait ne présentent pas des résistances thermique, chimique et mécanique satisfaisantes.

En effet, les membranes organiques présentent l'inconvénient d'avoir une faible résistance thermique, en général inférieure à 100°C et d'être trop sensibles à certains composés chimiques comme les oxydants ou les solvants organiques.

Le développement des membranes organiques de nanofiltration dans le traitement des effluents industriels, dans l'industrie chimique ou pétrochimique s'en trouve donc limité.

Ainsi, il existe actuellement un besoin pour de nouvelles membranes inorganiques de nanofiltration.

Un des objectifs de la présente invention est justement de fournir de nouvelles membranes inorganiques de nanofiltration présentant une bonne résistance mécanique, thermique et chimique et de ce fait une longue durée de vie.

L'invention a donc pour objet une membrane inorganique de nanofiltration comprenant :
- un support macroporeux en oxyde de titane,
- une ou plusieurs couches séparatrices intermédiaires,
- une couche séparatrice supérieure de nanofiltration en oxyde métallique.

Les membranes inorganiques de nanofiltration selon l'invention présentent un seuil de coupure compris entre 100 et 2000 daltons, de préférence compris entre 800 et 2000 daltons.

Le support macroporeux en oxyde de titane peut être classiquement fabriqué par frittage de particules d'oxyde de titane. L'oxyde de titane se présente en général sous forme rutile. Ce support présente une porosité élevée, de préférence supérieure à 30 % et une épaisseur moyenne comprise entre 0,3 et 5 mm.

Ce support peut être de conformation plane ou tubulaire et éventuellement multicanaux.

Les couches séparatrices peuvent être formées d'oxydes métalliques, par exemple choisis parmi les oxydes des métaux suivants : aluminium, titane, zirconium ou mélange de ces métaux. En particulier, la couche séparatrice supérieure de nanofiltration sera préférentiellement en oxyde de titane.

La membrane inorganique de nanofiltration selon l'invention comporte une couche séparatrice intermédiaire située entre la couche séparatrice supérieure de nanofiltration et le support, assurant la liaison entre ces derniers. Cette couche séparatrice intermédiaire est, par exemple, une couche de microfiltration.

Cette couche séparatrice intermédiaire peut également comporter une couche d'ultrafiltration en oxyde métallique déposée sur une couche de microfiltration en oxyde métallique, elle-même déposée sur le support. Dans ce cas, la couche de nanofiltration est déposée sur la couche d'ultrafiltration.

Les couches de microfiltration et ultrafiltration sont déposées selon des techniques bien connues de l'homme de l'art. La couche de microfiltration peut par exemple être déposée par le procédé d'engobage, suivi d'un frittage approprié.

De manière avantageuse, la couche de microfiltration et la couche d'ultrafiltration présentent respectivement une épaisseur moyenne comprise entre 5 et 50 µm et entre 2 et 10 µm. La couche de microfiltration est de préférence en oxyde de titane et la couche d'ultrafiltration en oxyde de titane ou de zirconium.

La couche de nanofiltration d'oxyde métallique est avantageusement obtenue par un procédé de type sol-gel.

Cette couche de nanofiltration est susceptible d'être obtenue par un procédé comprenant les étapes suivantes :
- formation d'un sol par polycondensation d'un alcoxyde du métal correspondant en milieu alcoolique et en présence d'un agent chélatant,
- dépôt dudit sol sur le support ou la couche séparatrice intermédiaire,
- séchage dudit sol pour former un gel,
- frittage du gel ainsi obtenu.

Dans ce cas, une hydrolyse partielle de l'alcoxyde métallique est obtenue, l'hydrolyse étant contrôlée par l'agent chélatant. Le traitement thermique permet de terminer la formation de l'oxyde et de créer la porosité. L'homme du métier est à même de choisir les conditions opératoires de la préparation du sol, du séchage et du frittage pour obtenir la porosité désirée.

La couche de nanofiltration d'oxyde métallique est également susceptible d'être obtenue par un procédé différent du précédent par sa première étape qui consiste en la formation d'un sol par hydrolyse d'un alcoxyde du métal correspondant puis peptisation.

Dans ce cas l'hydrolyse de l'alcoxyde métallique, réalisée de préférence dans un mélange eau/acide est totale. Un mélange d'hydroxyde métallique et d'oxyde amorphe ou cristallisé est ainsi obtenu puis est défloculé en milieu acide pour obtenir une suspension stable d'oxyde métallique cristallisé.

L'invention sera mieux comprise grâce aux exemples ci-après qui illustrent l'invention sans toutefois la limiter.

Dans les exemples qui vont suivre les supports utilisés sont tubulaires avec un diamètre externe de 10 mm et un diamètre interne de 6 mm. Les supports selon l'invention sont en oxyde de titane. A titre de comparaison, des supports en alumine et en zirconium sont également mis en oeuvre. Les supports présentant les caractéristiques suivantes sont préparés selon les techniques bien connues de l'homme de l'art :
- support en oxyde de titane :
   - température de frittage : 1390 °C
   - diamètre moyen de pore : 6 µm, porosité 35 %
   - angle de mouillage avec l'eau : 66°
- support en alumine :
   - température de frittage : 1730 °C
   - diamètre moyen de pore : 4,5 µm, porosité 31 %
   - angle de mouillage avec l'eau : 0,5°
- support en zircone :
   - température de frittage : 1840 °C
   - diamètre moyen de pore : 2,1 µm, porosité 37 %
   - angle de mouillage avec l'eau : 32°.

Ces supports présentent donc des angles de mouillages très différents. Ces angles de mouillage ont été déterminés par une méthode basée sur la mesure du débit d'une colonne de poudre obtenue par broyage du support à étudier. L'application de la loi de Poiseuille au débit permet de calculer la valeur de l'angle de mouillage.

Sur ces trois types de support, des couches de microfiltration en oxyde de titane présentant un diamètre moyen de pore de 0,2 µm sont déposées.

Ces dépôts sont réalisés de manière classique en déposant un oxyde de titane de 0,2 µm de diamètre moyen de pores sous forme d'une suspension stable, à l'aide d'un tensioactif approprié.

Après dépôt, un frittage à une température de 1 050°C permet d'obtenir cette valeur de diamètre moyen de pores égale à 0,2 µm. Sur ces couches de microfiltration, on réalise soit directement le dépôt d'une couche de nanofiltration selon les deux méthodes qui seront exposées ci-après, soit une couche d'ultrafiltration.

La couche d'ultrafiltration est réalisée avec de l'oxyde de titane ou de l'oxyde de zirconium avec une température de frittage permettant d'obtenir un pouvoir de coupure de la membrane de l'ordre de 50 kD (kiloDalton).

Une couche de nanofiltration est alors déposée sur ces couches d'ultrafiltration.

Les couches de nanofiltration sont réalisées selon les deux méthodes exposées ci-après.

### 1^{ERU} METHODE : POLYCONDENSATION

Un mélange d'isobutoxyde de titane et d'acétylacétone dans de l'isobutanol et de l'eau est réalisé.

L'acétylacétone est un agent chélatant permettant de retarder l'hydrolyse. Le mélange réactionnel contient des quantités d'isobutoxyde de titane, d'acétylacétone, d'isobutanol et d'eau appropriées pour obtenir un polycondensat. A cet effet, on pourra consulter Chemistry of Materials 1989,1248-252.

### 2^{EME} METHODE : HYDROLYSE PUIS PEPTISATION

Un mélange d'isobutoxyde de titane et d'isobutanol est ajouté lentement sur un mélange d'eau et d'acide monovalent. Le mélange blanc obtenu est laissé en milieu acide pendant quelques jours jusqu'à devenir totalement transparent. A cet effet, on pourra consulter Journal of Materials Science Letters, 1995, 14, 21-22.

Les résultats obtenus sont exposés dans les **TABLEAUX 1** et **2** ci-après.

Le **TABLEAU 1** récapitule les résultats obtenus avec des membranes de nanofiltration comportant un support en oxyde de titane, alumine ou zircone, une couche de microfiltration en oxyde de titane, éventuellement une couche d'ultrafiltration et une couche de nanofiltration en oxyde de titane obtenue par polycondensation puis frittage à 350°C. mₛ représente la masse spécifique de la couche de nanofiltration déposée.

**TABLEAU 1**

| Support | ultrafiltration | mₛ (g/m²) | Perméabilité à l'eau (1/(h.m².b)) | Rétention au PEG 1000 g/mol (%) |
|---|---|---|---|---|
| TiO₂ | non | 2 | 50 | 80 |
| | | 3 | 35 | 91 |
| | | 4 | 55 | 75 |
| Al₂O₃ | non | 2 | 120 | 25 |
| | | 3 | 110 | 55 |
| | | 4 | 140 | 15 |
| ZrO₂ | non | 2 | 90 | 65 |
| | | 3 | 60 | 75 |
| | | 4 | 80 | 66 |
| TiO₂ | ZrO₂ | 2 | 40 | 85 |
| | | 3 | 30 | 93 |
| | | 4 | 25 | 95 |
| Al₂O₃ | ZrO₂ | 2 | 110 | 35 |
| | | 3 | 110 | 40 |
| | | 4 | 90 | 55 |
| ZrO₂ | ZrO₂ | 2 | 80 | 75 |
| | | 3 | 70 | 75 |
| | | 4 | 65 | 80 |
| TiO₂ | TiO₂ | 2 | 35 | 84 |
| | | 3 | 26 | 94 |
| | | 4 | 21 | 98 |
| Al₂O₃ | TiO₂ | 2 | 100 | 33 |
| | | 3 | 110 | 38 |
| | | 4 | 100 | 54 |
| ZrO₂ | TiO₂ | 2 | 76 | 75 |
| | | 3 | 70 | 78 |
| | | 4 | 60 | 85 |

Le **TABLEAU 2** récapitule les résultats obtenus avec des membranes de nanofiltration comportant un support en oxyde de titane, alumine ou zircone, une couche de microfiltration en oxyde de titane, éventuellement une couche d'ultrafiltration et une couche de nanofiltration en oxyde de titane obtenue par hydrolyse et peptisation puis frittage à 300°C.

**TABLEAU 2**

| Support | ultrafiltration | mₛ (g/m²) | Perméabilité à l'eau (l/(h.m².b)) | Rétention au PEG 1000 g/mol (%) |
|---|---|---|---|---|
| TiO₂ | non | 2 | 35 | 80 |
| | | 3 | 20 | 92 |
| | | 4 | 50 | 70 |
| Al₂O₃ | non | 2 | 55 | 65 |
| | | 3 | 50 | 69 |
| | | 4 | 100 | 30 |
| ZrO₂ | non | 2 | 45 | 69 |
| | | 3 | 40 | 75 |
| | | 4 | 80 | 45 |
| TiO₂ | ZrO₂ | 2 | 70 | 45 |
| | | 3 | 60 | 55 |
| | | 4 | 140 | 30 |
| Al₂O₃ | ZrO₂ | 2 | 200 | 15 |
| | | 3 | 180 | 20 |
| | | 4 | 250 | 5 |
| ZrO₂ | ZrO₂ | 2 | 150 | 30 |
| | | 3 | 140 | 35 |
| | | 4 | 250 | 10 |
| TiO₂ | TiO₂ | 2 | 65 | 65 |
| | | 3 | 60 | 55 |
| | | 4 | 130 | 35 |
| Al₂O₃ | TiO₂ | 2 | 130 | 35 |
| | | 3 | 135 | 35 |
| | | 4 | 200 | 10 |
| ZrO₂ | TiO₂ | 2 | 180 | 20 |
| | | 3 | 140 | 25 |
| | | 4 | 200 | 10 |

Dans les membranes présentées dans le **TABLEAU 1**, seules les membranes selon l'invention dont le support est en oxyde de titane possèdent un seuil de coupure de l'ordre de 1 000 daltons correspondant à un taux de rejet pour une masse molaire de 90 %.

Ces résultats montrent que lorsqu'un support en oxyde de titane est utilisé, les membranes de nanofiltration obtenues présentent une meilleure perméabilité à l'eau et une meilleure rétention au polyéthylène glycol.

Ces résultats sont en accord avec la valeur des angles de mouillage des supports utilisés qui participent à la force d'aspiration et donc à la vitesse de pénétration des liquides à l'intérieur des pores du support. En effet, il apparaît que plus l'angle est élevé, plus cette vitesse est faible, ce qui devrait entraîner une structuration lente du dépôt qui semble plus favorable à sa qualité.

De plus, il est préférable d'utiliser le procédé hydrolyse et peptisation, dans le cas où les couches de nanofiltration sont déposées sur des couches de microfiltration.

## Revendications

1. Membrane inorganique de nanofiltration **caractérisée en ce qu'**elle comprend :
- un support macroporeux en oxyde de titane,
- une ou plusieurs couches séparatrices intermédiaires,
- une couche séparatrice supérieure de nanofiltration en oxyde métallique.

2. Membrane inorganique de nanofiltration selon la revendication 1, **caractérisée en ce qu'**elle présente un seuil de coupure compris entre 100 et 2000 daltons, de préférence compris entre 800 et 2000 daltons.

3. Membrane inorganique de nanofiltration selon la revendication 1 ou 2, **caractérisée en ce qu'**elle est de conformation tubulaire.

4. Membrane inorganique de nanofiltration selon la revendication 1 ou 2, **caractérisée en ce qu'**elle est de conformation plane.

5. Membrane inorganique de nanofiltration selon l'une des revendications 1 à 4, **caractérisée en ce que** la couche séparatrice de nanofiltration présente une masse spécifique comprise entre 2 et 4 g/m², de préférence égale à 3 g/m².

6. Membrane inorganique de nanofiltration selon l'une des revendications 1 à 5, **caractérisée en ce que** la couche séparatrice supérieure de nanofiltration est en oxyde de titane.

7. Membrane inorganique de nanofiltration selon l'une des revendications 1 à 6, **caractérisée en ce que** la couche séparatrice intermédiaire est une couche de microfiltration en oxyde métallique.

8. Membrane inorganique de nanofiltration selon la revendication 7, **caractérisée en ce que** la couche de microfiltration est en oxyde de titane.

9. Membrane inorganique de nanofiltration selon l'une des revendications 1 à 6, **caractérisée en ce que** la couche séparatrice intermédiaire comporte une couche d'ultrafiltration en oxyde métallique déposée sur une couche de microfiltration en oxyde métallique, elle-même déposée sur le support.

10. Membrane inorganique de nanofiltration selon la revendication 9, **caractérisée en ce que** la couche séparatrice d'ultrafiltration est en oxyde de titane.

11. Membrane inorganique de nanofiltration selon la revendication 9, **caractérisée en ce que** la couche séparatrice d'ultrafiltration est en oxyde de zirconium.

12. Membrane inorganique de nanofiltration selon l'une des revendications 9 à 11, **caractérisée en ce que** la couche de microfiltration est en oxyde de titane.

13. Procédé de préparation d'une membrane inorganique de nanofiltration selon l'une des revendications 1 à 12, **caractérisée en ce que** la couche de nanofiltration d'oxyde métallique est obtenue par un procédé comprenant les étapes suivantes :
- formation d'un sol par polycondensation d'un alcoxyde du métal correspondant en milieu alcoolique et en présence d'un agent chélatant,
- dépôt dudit sol sur le support ou la couche séparatrice intermédiaire,
- séchage dudit sol pour former un gel,
- frittage du gel ainsi obtenu.

14. Procédé de préparation d'une membrane inorganique de nanofiltration selon l'une des revendications 1 à 12, **caractérisée en ce que** la couche de nanofiltration d'oxyde métallique est obtenue par un procédé comprenant les étapes suivantes :
- formation d'un sol par hydrolyse d'un alcoxyde du métal correspondant puis peptisation,
- dépôt dudit sol sur le support ou la couche séparatrice intermédiaire,
- séchage dudit sol pour former un gel,
- frittage du gel ainsi obtenu.

## Claims

1. Inorganic nanofiltration membrane **characterized in that** it comprises:
- a titanium oxide macroporous support,
- one or several intermediate separation layers,
- an upper metal oxide nanofiltration separation layer.

2. Inorganic nanofiltration membrane as in claim 1, **characterized in that** its cutoff threshold lies between 100 and 2000 daltons, preferably between 800 and 2000 daltons.

3. Inorganic nanofiltration membrane as in claim 1 or 2, **characterized in that** it is of tubular conformation.

4. Inorganic nanofiltration membrane as in claim 1 or 2, **characterized in that** it is of planar conformation.

5. Inorganic nanofiltration membrane as in any of claims 1 to 4, **characterized in that** the nanofiltration separation layer has a density of between 2 and 4 g/m², preferably of 3 g/m².

6. Inorganic nanofiltration membrane as in any of claims 1 to 5, **characterized in that** the upper nanofiltration separation layer is in titanium oxide.

7. Inorganic nanofiltration membrane as in any of claims 1 to 6, **characterized in that** the intermediate separation layer is a microfiltration layer in metal oxide.

8. Inorganic nanofiltration membrane as in claim 7, **characterized in that** the microfiltration layer is in titanium oxide.

9. Inorganic nanofiltration membrane as in any of claims 1 to 6, **characterized in that** the intermediate separation layer comprises an ultrafiltration layer in metal oxide deposited on a microfiltration layer in metal oxide, itself deposited on the support.

10. Inorganic nanofiltration membrane as in claim 9, **characterized in that** the ultrafiltration layer is in titanium oxide.

11. Inorganic nanofiltration membrane as in claim 9, **characterized in that** the ultrafiltration layer is in zirconium oxide.

12. Inorganic nanofiltration membrane as in any of claims 9 to 11, **characterized in that** the microfiltration layer is in titanium oxide.

13. Preparation process of an inorganic nanofiltration, membrane as in any of claims 1 to 12, **characterized in that** the nanofiltration layer of metal oxide is obtained using a method comprising the following steps :
- formation of a sol by polycondensation of an alkoxide of the corresponding metal in an alcohol medium and in the presence of a chelating agent,
- depositing said sol on the support or the intermediate separation layer,
- drying said sol to form a gel,
- sintering the gel obtained.

14. Preparation process of an inorganic nanofiltration membrane as in any of claims 1 to 12, **characterized in that** the nanofiltration layer of metal oxide is obtained using a method comprising the following steps:
- formation of a sol by hydrolysis of an alkoxide of the corresponding metal followed by peptization,
- depositing said sol on the support or the intermediate separation layer,
- drying said sol to form a gel,
- sintering the gel obtained.

## Patentansprüche

1. Anorganische Nanofiltrationsmembran, **dadurch gekennzeichnet, daß** sie umfaßt:
- einen makroporösen Träger aus Titanoxid,
- eine oder mehrere Zwischentrennschichten,
- eine obere Nanofiltrationstrennschicht aus Metalloxid.

2. Anorganische Nanofütrationsmembran nach Anspruch 1, **dadurch gekennzeichnet, daß** sie eine Trenngrenze zwischen 100 und 2000 Dalton, vorzugsweise zwischen 800 und 2000 Dalton aufweist.

3. Anorganische Nanofiltrationsmembran nach Anspruch 1 oder 2, **dadurch gekennzeichnet, daß** sie rohrförmig ausgebildet ist.

4. Anorganische Nanofiltrationsmembran nach Anspruch 1 oder 2, **dadurch gekennzeichnet, daß** sie eben ausgebildet ist.

5. Anorganische Nanofiltrationsmembran nach einem der Ansprüche 1 bis 4, **dadurch gekennzeichnet, daß** die Nanofiltrationstrennschicht eine spezifische Masse zwischen 2 und 4 g/m², vorzugsweise von gleich 3 g/m² aufweist.

6. Anorganische Nanofiltrationsmembran nach einem der Ansprüche 1 bis 5, **dadurch gekennzeichnet, daß** die obere Nanofiltrationstrennschicht aus Titanoxid besteht.

7. Anorganische Nanofiltrationsmembran nach einem der Ansprüche 1 bis 6, **dadurch gekennzeichnet, daß** die Zwischentrennschicht eine Mikrofiltrationsschicht aus Metalloxid ist.

8. Anorganische Nanofiltrationsmembran nach Anspruch 7, **dadurch gekennzeichnet, daß** die Mikrofiltrationsschicht aus Titanoxid besteht.

9. Anorganische Nanofiltrationsmembran nach einem der Ansprüche 1 bis 6, **dadurch gekennzeichnet, daß** die Zwischentrennschicht eine Ultrafiltrationsschicht aus Metalloxid umfaßt, die auf einer Mikrofiltrationsschicht aus Metalloxid abgeschieden ist, die ihrerseits auf dem Träger abgeschieden ist.

10. Anorganische Nanofiltrationsmembran nach Anspruch 9, **dadurch gekennzeichnet, daß** die Ultrafiltrationstrennschicht aus Titanoxid besteht.

11. Anorganische Nanofiltrationsmembran nach Anspruch 9, **dadurch gekennzeichnet, daß** die Ultrafiltrationstrennschicht aus Zirkonoxid besteht.

12. Anorganische Nanofiltrationsmembran nach einem der Ansprüche 9 bis 11, **dadurch gekennzeichnet, daß** die Mikrofiltrationsschicht aus Titanoxid besteht.

13. Verfahren zur Herstellung einer anorganischen Nanofiltrationsmembran nach einem der Ansprüche 1 bis 12, **dadurch gekennzeichnet, daß** die Metalloxid-Nanofiltrationsschicht mittels eines Verfahrens erhalten wird, das die folgenden Schritte umfaßt:
- Ausbildung eines Sols durch Polykondensation eines Alkoxids des entsprechenden Metalls in alkoholischem Medium und in Gegenwart eines Chelatmittels,
- Abscheiden des Sols auf dem Träger oder der Zwischentrennschicht,
- Trocknen des Sols, um ein Gel zu bilden,
- Sintern des so erhaltenen Gels.

14. Verfahren zur Herstellung einer anorganischen Nanofiltrationsmembran nach einem der Ansprüche 1 bis 12, **dadurch gekennzeichnet, daß** die Metalloxid-Nanofiltrationsschicht mittels eines Verfahrens erhalten wird, das die folgenden Schritte umfaßt:
- Ausbildung eines Sols durch Hydrolyse eines Alkoxids des entsprechenden Metalls, anschließend durch Peptisation,
- Abscheiden des Sols auf dem Träger oder der Zwischentrennschicht,
- Trocknen des Sols, um ein Gel zu bilden,
- Sintern des so erhaltenen Gels.
